# EUROPÄISCHE PATENTSCHRIFT

(11) **EP 1 081 233 B1**
(45) Veröffentlichungstag und Bekanntmachung des Hinweises auf die Patenterteilung: **21.06.2006**
(21) Anmeldenummer: 00116530.7
(22) Anmeldetag: 31.07.2000
(51) Int. Cl.: C12Q 1/68, B01L 3/00, G01N 1/31

(54) **Probenkammer zur Flüssigkeitsbehandlung biologischer Proben**
Sample chamber for liquid treatment of biological samples
Chambre d'échantillon pour le traitement d'échantillons biologiques par des liquides

(30) Priorität: 02.09.1999 DE 19941905
(43) Veröffentlichungstag der Anmeldung: 07.03.2001
(73) Patentinhaber: Max-Planck-Gesellschaft zur Förderung der Wissenschaften e.V., 80539 München (DE)
(72) Erfinder: Eichele, Gregor, 30625 Hannover (DE); Herzig, Uwe, 30163 Hannover (DE)
(74) Vertreter: Hertz, Oliver

(56) Entgegenhaltungen:
- EP-A- 0 310 399
- EP-A- 0 366 241
- DE-U- 29 721 359
- US-A- 4 596 695
- US-A- 4 790 640
- US-A- 5 675 700
- US-A- 5 830 413

## Beschreibung

Die Erfindung betrifft eine Probenkammer für die Flüssigkeitsbehandlung mindestens einer Probe, insbesondere eine Durchflußkammer zur Flüssigkeitsbehandlung biologischer Proben, wie z.B. eine Durchflußkammer zum Nachweis von Nukleinsäuren und Proteinen mittels Gensonden-Hybridisierung bzw. mittels Antikörper.

Genome von Tieren und Pflanzen enthalten in der Größenordnung 10⁵ Gene, die in bestimmter Weise exprimiert werden. Die Kenntnis der Genexpression in den Geweben, die einen Organismus bilden, ist von grundsätzlicher Bedeutung für das Verständnis der Physiologie und Pathophysiologie eines Lebewesens. Es besteht ein Interesse an der Expressionsanalyse an einzelnen biologischen Zellen. Dies wird durch *in situ* Hybridisierung (im folgenden: ISH) in Kombination mit Verfahren der Immunhistochemie erzielt. Desweiteren ist in diesem Zusammenhang auch die Hybridisierung und Darstellung von DNA-Mikroarrays von Interesse.

Unter dem Begriff der ISH versteht man einerseits die Hybridisierung an genomische DNA bzw. durch RT-PCR generierte DNA bzw. von in vitro synthetisierter RNA und andererseits die Hybridisierung an zelluläre mRNA. Aus dem heute allgemein in Lehrbüchern beschriebenen Prinzip der ISH, das erstmals von M. L. Pardue beschrieben wurde, hat sich inzwischen eine weltweit in Laboratorien realisierte Verfahrensweise mit einer Vielzahl manuell abgearbeiteter Einzelschritte entwickelt. Wesentliche Faktoren des Verfahrens sind die Nukleinsäure-Hybridbildung und der Nachweis der Hybride. Zur Hybridbildung müssen die Proben, die Gewebeschnitte mit pflanzlichen oder tierischen Zellen umfassen, unter genau kontrollierten Temperaturbedingungen entsprechend vorbestimmten Zeitprogrammen flüssigen Reagenzien ausgesetzt werden. Eine ISH kann beispielsweise 50 Einzelschritte umfassen, wobei bei jedem Einzelschritt die Gewebeprobe innerhalb von einigen Sekunden auf eine vorbestimmte Temperatur im Bereich von z.B. 4°C bis 100°C mit einer Genauigkeit von +/- 1°C temperiert und vorbestimmten Reagenzien ausgesetzt wird. Sowohl in Bezug auf den Zeitaufwand als auch im Bezug auf die Genauigkeit der Prozeßführung wird die bisherige manuelle Verfahrensweise den Anforderungen bei der Bearbeitung großer Probenzahlen ("high-throughput"-Verfahren), die Hunderte oder gar Tausende von Präparaten umfassen können, nicht gerecht.

Mit dem Ziel, die ISH zu automatisieren, wurden Durchflußkammern entwickelt, die zur Halterung von Gewebeproben oder Mikroarrays und deren Flüssigkeitsbehandlung ausgelegt sind. Ein Beispiel einer herkömmlichen Durchflußkammer 10', die von der Firma "Shandon Southern Instruments LTD", Großbritannien, z.B. EP 0310399 vertrieben wird, ist in Figur 12 (Stand der Technik) illustriert. Die Durchflußkammer 10' basiert im wesentlichen auf einer Kombination aus einer Deckplatten-Anordnung 20' und einer Trägerplatte 30', wobei die Deckplatten-Anordnung 20' an ihrer Einlaßseite eine trichterförmige Erweiterung 21' zur Aufnahme von Behandlungsflüssigkeiten aufweist. Eine Gewebeprobe wird in den Raum zwischen der Abdeckplatten-Anordnung 20' und der Trägerplatte 30' eingebracht und dort fixiert. Die Kombination aus der Deckplatten-Anordnung 20' und der Trägerplatte 30' wird in eine (nicht dargestellte) Kassette eingesetzt. Zur Flüssigkeitsbehandlung werden die jeweiligen Reagenzien über die Erweiterung 21' zugeführt. Obwohl die Durchflußkammer 10' eine automatisierte Verwendung mit Pipettierrobotern ermöglicht, besitzt sie die folgenden Nachteile, durch die ein Einsatz für die oben genannte ISH ausgeschlossen oder auf bestimmte, wenig anspruchsvolle Verfahrensprotokolle beschränkt ist.

Durch den komplizierten Aufbau der Kammerteile mit der äußeren Kassette ist die herkömmliche Durchflußkammer nicht reproduzierbar temperierbar. Desweiteren besteht bei der herkömmlichen Durchflußkammer gemäß Figur 12 die Deckplatten-Anordnung 20' aus einem Kunststoff, der bei Einsatz unter den bei der ISH auftretenden Temperaturen oberhalb 60°C nicht formbeständig ist. Damit ist die Reproduzierbarkeit des Reagenziendurchflusses beschränkt. Ferner wird auch durch die Gestalt der Abdeckplatten-Anordnung 20' und die chemische Zusammensetzung der Abdeckplatte ein gleichmäßiger Fluß der bei der ISH verwendeten formamid-haltigen Lösungen unmöglich gemacht, so daß es zu einer räumlich inhomogenen Hybridisierungsreaktion kommt, indem beispielsweise Luftblasen entstehen oder Gewebeteile oder Proben umflossen werden. Auch durch die Kombination von Kunststoff- mit Glasmaterialien für die Bildung der Kammerwandungen ist eine reproduzierbare Temperierung ausgeschlossen.

Generell eignet sich keine der allgemein bekannten Proben- oder Durchflußkammern für die Analyse von DNA-Mikroarrays, insbesondere bei Verfahrensweisen mit hohem Durchsatz. Auch wenn die im Laborbereich bisher eingesetzte Probenkammer für Gewebeproben thermostatisierbar sind, ist ein automatischer Reagenzienaustausch unmöglich. Die manuelle Probenbeschickung mit Handpipetten ist jedoch für Verfahren mit hohem Durchsatz ungeeignet.

Es ist die Aufgabe der Erfindung, eine verbesserte Probenkammer für Flüssigkeitsbehandlung von Proben bereitzustellen, die zuverlässig und reproduzierbar temperierbar und auch bei wiederholter Temperierung formbeständig sein soll und die insbesondere eine automatisierte Probenbehandlung im Durchflußprinzip auch bei hohen Probendurchsätzen (rd. 100 bis 500 pro Durchgang) ermöglichen soll.

Diese Aufgabe wird durch eine Durchflußkammer mit den Merkmalen gemäß Patentanspruch 1 gelöst. Vorteilhafte Ausführungsformen und Verwendungen der Erfindung ergeben, sich aus den abhängigen Ansprüchen.

Die Grundidee der Erfindung besteht in der Schaffung einer Probenkammer aus einer Grundplatte und einer Trägerplatte, die durch Distanzhalter mit einem vorbestimmten Abstand voneinander getrennt mit einer Rahmenanordnung zusammengehalten werden. Die Grund- und Trägerplatten besitzen vorzugsweise die gleiche Grundfläche. Sie bilden im zusammengesetzten Zustand eine ausgerichtete Packung, wobei durch den Abstand zwischen den Platten eine Aufnahme für die Probe gebildet wird. Die Aufnahme ist bei Gestaltung der Probenkammer als Durchflußkammer zu zwei, einander gegenüberliegenden Seiten zur Bildung eines Zulaufs bzw. eines Ablaufs offen und an den übrigen Seiten flüssigkeitsdicht verschlossen. Hierzu verlaufen die Distanzhalter streifenförmig zwischen den beiden, relativ zueinander ausgerichteten Rändern der Grund- und Trägerplatten zwischen dem Zulauf und dem Ablauf. Die Grundplatte besitzt am Zulauf eine Verjüngung (zum Plattenende hin sich verringernde Plattendicke) zur Bildung eines Reservoirs zwischen den Grund- und Trägerplatten.

In der Rahmenanordnung werden die Grund- und Trägerplatten zueinander ausgerichtet zusammengehalten. Zur gegenseitigen Fixierung der Platten in der Rahmenanordnung ist eine Klammereinrichtung vorgesehen, die die Rahmenanordnung einerseits und die in ihr angeordneten Platten andererseits unter Ausbildung einer gleichförmigen Andruckspannung umgreift. Unter Wirkung der Andruckspannung wird die zwischen den Grund- und Trägerplatten gebildete Aufnahme für die Probe seitlich entlang der Distanzhalter flüssigkeitsdicht geschlossen. Die Rahmenanordnung ist ferner mit einer Einhängvorrichtung ausgestattet, die zur Anbringung der Durchflußkammer an einer Kontaktplattform einer Temperierungseinrichtung ausgelegt ist.

Die Grund- und Trägerplatten der erfindungsgemäßen Probenkammer bestehen vorzugsweise aus dem gleichen oder in Bezug auf die thermischen Eigenschaften ähnlichen Material. Damit werden die Temperierung verbessert, Deformationen vermieden und auch die Fließeigenschaften durchfließender Behandlungsflüssigkeiten in der Probenaufnahme gleichförmig ausgebildet. Die Platten bestehen vorzugsweise aus Glas oder anwendungsabhängig auch aus einem temperaturbeständigen Kunststoff oder Quarzglas.

Gemäß einer weiteren Ausführungsform der Erfindung ist auch eine Temperierungseinrichtung (sog. Thermoblock) mit einer Vielzahl von reihen- und spaltenweise angeordneten temperierbaren Kontaktplattformen vorgesehen. Die Kontaktplattformen besitzen im Betriebszustand eine nahezu vertikale (z. B. 15°) oder eine weiter gegenüber der Vertikalen um einen vorbestimmten Winkel (bis fast 90°) verschwenkte Ausrichtung, wobei an ihrem oberen Ende ein profilierter Vorsprung zur Anbringung der erfindungsgemäßen Probenkammer vorgesehen ist. Der Vorsprung wirkt mit der Einhängvorrichtung der Probenkammer so zusammen, daß im eingehängten Zustand die Probenkammer aufgrund ihres Gewichts hin zur Kontaktplattform gezogen wird und mit dieser einen guten thermischen Kontakt ausbildet.

Die Erfindung besitzt die folgenden Vorteile. Die erfindungsgemäße Probenkammer eignet sich besonders gut zum Einsatz als Durchflußkammer zur Flüssigkeitsbehandlung biologischer Proben. Die Kammer besitzt einen besonders einfachen, modularen Aufbau mit im wesentlichen nur zwei Elementen (den Grund- und Trägerplatten), die im Rahmen verklammert sind. Der Glasaufbau ist gegenüber den jeweils eingesetzten Reagenzien, insbesondere gegenüber wäßrigen und organischen Lösungsmitteln, beständig. Die durch Ablösung der Klammervorrichtung an sich ohne weiteres leicht trennbaren Teile der Durchflußkammer sind einerseits nach Beschickung der Trägerplatte mit einer Probe einfach und schnell zusammenzusetzen und nach der Probenbearbeitung zur Entfernung der Probe bzw. Reinigung der Kammer ohne weiteres voneinander trennbar. Die Durchflußkammer ist autoklavierbar, was für die Wiederverwertung von Vorteil ist.

Der kompakte Aufbau unter Ausübung der Druckspannung durch die Klammereinrichtung stellt eine optimale Wärmeleitung von einer äußeren Temperierungseinrichtung zu der Probe in der Durchflußkammer sicher. Die aus Glas bestehenden Grund- und Trägerplatten zeigen in den interessierenden Temperaturbereichen unterhalb von 100°C keinerlei Verformungen. Die Durchflußkammer kann schnell und reproduzierbar an der Kontaktplattform eines Thermoblocks angebracht werden. Gleichzeitig ist die Rahmenanordnung der Kammer so aufgebaut, daß die Probe der visuellen Beobachtung und optischen Messungen zugänglich bleibt.

Ein besonders wichtiger Vorteil ist gegeben, wenn die Trägerplatte durch einen standardisierten Glasobjektträger, wie er aus der Lichtmikroskopie bekannt ist, gebildet wird. Damit ist die erfindungsgemäße Durchflußkammer mit den üblichen Manipulierungstechniken für Glasobjektträger vollständig kompatibel. Ferner kann die Trägerplatte durch ein für Folgemessungen oder auch für weitere Behandlungsschritte geeignetes Substrat gebildet werden. Besteht die Trägerplatte z. B. aus UVdurchlässigem Glas von optisch hoher Qualität, wird die Synthese von Oligonukleotiden durch maskierte photochemische Reaktionen unmittelbar auf der Trägerplatte ermöglicht.

Die erfindungsgemäße Durchflußkammer zeichnet sich durch erheblich verbesserte Fließeigenschaften der Reagenzien durch die Aufnahme für die Probe aus. Während beispielsweise in einer herkömmlichen Durchlußkammer gemäß Figur 12 die Behandlungsflüssigkeit einerseits mit Kunststoff und andererseits mit Glas in Kontakt kommt, so daß sich auf beiden Kammerseiten Unterschiede in der Fließgeschwindigkeit und damit Strömungsinhomogenitäten oder sogar Blasen bilden, erfahren bei der erfindungsgemäßen Durchflußkammer die durchlaufenden Reagenzien an allen Kammerwänden den gleichen Oberflächenwiderstand, so daß Strömungsinhomogenitäten oder Blasen vermieden werden.

Der Einsatz der erfindungsgemäßen Durchflußkammer ist nicht auf die ISH beschränkt, sondern allgemein mit beliebigen Proben, insbesondere biologischen Proben, die mit flüssigen Reagenzien bearbeitet werden, wie z.B. Proben zur Untersuchung von Antikörperreaktionen, zur Hybridisierung und Darstellung von DNA-Mikroarrays oder dergleichen, einsetzbar.

Weitere Einzelheiten und Vorteile der Erfindung werden aus der Beschreibung der beigefügten Zeichnungen ersichtlich. Es zeigen:
- Figur 1: eine schematische Perspektivdarstellung einer ersten Ausführungsform der erfindungsgemäßen Probenkammer,
- Figur 2: eine Schnittansicht der in Figur 1 gezeigten Probenkammer,
- Figuren 3, 4: Drauf- und Seitenansichten einer Grundplatte einer abgewandelten Probenkammer,

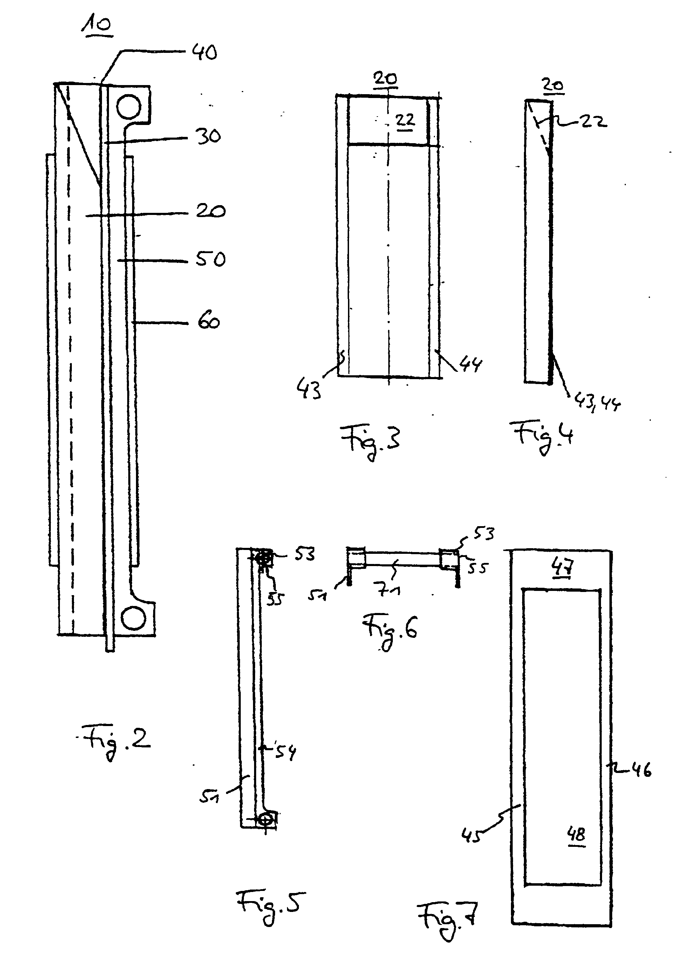

- Figuren 5, 6: Seitenansichten einer Rahmenanordnung einer Probenkammer gemäß Figur 2,
- Figur 7: eine Illustration eines Folien-Distanzhalters,
- Figur 8: eine schematische Ausschnittsdarstellung eines Thermoblocks,
- Figur 9: eine vergrößerte Darstellung von Kontaktprattformen eines Thermoblocks gemäß Figur 8,
- Figur 10: eine Illustration der Anbringung einer erfindungsgemäßen Probenkammer gemäß Figur 2 an einer Kontaktplattform gemäß Figur 9,
- Figur 11: eine schematische Perspektivdarstellung eines Greifers für erfindungsgemäße Probenkammern, und
- Figur 12: eine schematische Perspektivansicht einer herkömmlichen Durchflußkammer (Stand der Technik).

Die Erfindung wird im folgenden ohne Beschränkung unter Bezug auf eine Probenkammer beschrieben, die als Durchflußkammer ausgebildet ist. Eine Implementierung als geschlossene Reaktionskammer ist in analoger Weise möglich.

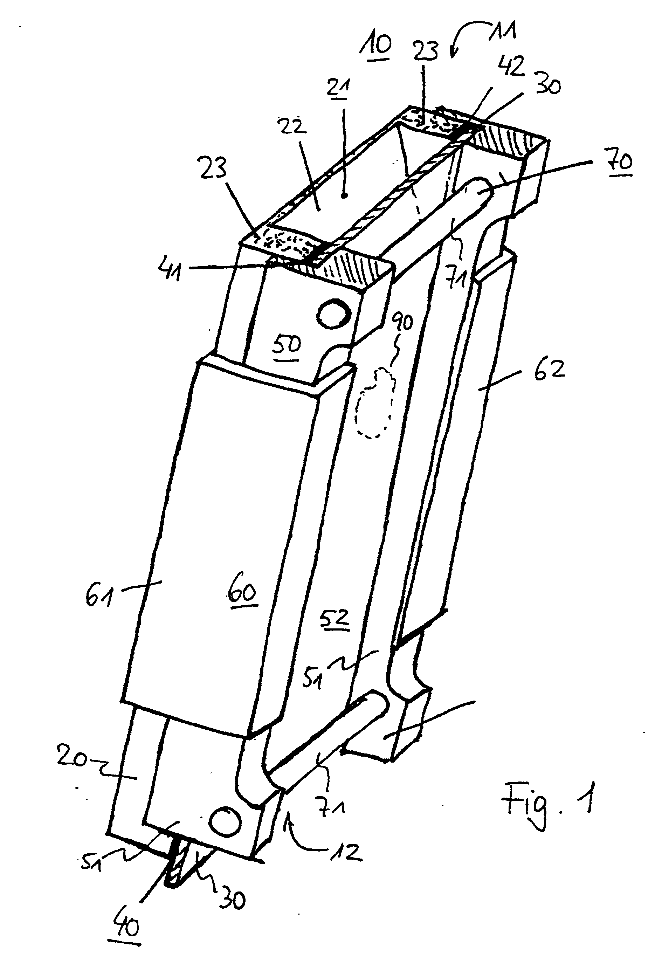

Figur 1 illustriert gemäß einer bevorzugten Ausführungsform der Erfindung in Perspektivdarstellung als Grundkomponenten der Durchflußkammer 10 die Grundplatte 20, die Trägerplatte 30, die Distanzhalter 40, die Rahmenanordnung 50, die Klammereinrichtung 60 und die Einhängvorrichtung 70. Im zusammengesetzten Zustand bilden die Grund- und Trägerplatten 20, 30 mit den Distanzhaltern 40 eine ausgerichtete Packung in der Rahmenanordnung 50, wobei diese Packung durch die Klammereinrichtung 60 zusammengehalten wird. Im Betriebszustand ist die Durchflußkammer 10 wie dargestellt nahezu vertikal ausgerichtet, wobei am oberen Ende ein Zulauf 11 und am unteren Ende ein Ablauf 12 ausgebildet ist. Am Zulauf 11 bzw. Ablauf 12 ist die Durchflußkammer 10 nach oben bzw. unten zur Aufnahme bzw. zur Abgabe von Behandlungsflüssigkeiten offen. In Figur 2 sind diese Grundkomponenten der Durchflußkammer 10 in Schnittdarstellung illustriert.

Die Grundplatte 20 ist eine Glasplatte mit einer rechteckigen Grundfläche und einer vorbestimmten Dicke. Typische Dimensionen betragen beim Zusammenwirken mit einem Objektträger als Trägerplatte beispielsweise 73 mm · 26 mm · 6 mm. Beim Einsatz eines in der Mikroskopie verwendeten bzw. gängigen Deckglases als Trägerplatte wird die Fläche der Grundplatte entsprechend geringer gewählt. An einem Ende, das im Betriebszustand den Zulauf 11 bildet, ist die Grundplatte 20 zur Bildung eines Flüssigkeitsreservoirs 21 mittig schräg ausgearbeitet, so daß zwischen zwei Stegen 23 eine keilförmige Rampe entsteht. Die Stege 23 besitzen eine Breite von beispielsweise rd. 3 mm. Das Flüssigkeitsreservoir 21 wird von der Grundplatte 20 durch den Rampenbereich 22, in dem sich die Dicke der Glasplatte 20 hin zu ihrem Ende verringert, und durch die seitlichen Stege 23, an denen die Dicke der Glasplatte 20 bis zum Ende beibehalten wird, begrenzt. Bei einer alternativen Gestaltung der Grundplatte gemäß den Figuren 3 und 4 erfolgt die seitliche Begrenzung durch Stege der Distanzhalter 40 (siehe unten).

Von der Seite der Trägerplatte 30 her wird das Flüssigkeitsreservoir 21 durch die Trägerplatte 30 selbst begrenzt. Der Rampenbereich 22 besitzt vorzugsweise eine derartige Größe, daß das Flüssigkeitsreservoir 21 ein Volumen von rund 0.2 bis 1 ml aufweist. Das Volumen des Flüssigkeitsreservoirs 21 ist vorzugsweise ein Vielfaches des Volumens der zwischen den Grund- und Trägerplatten 20, 30 gebildeten Aufnahme (rund 120 µl). Dies besitzt den folgenden Vorteil. Einerseits können im Flüssigkeitsreservoir Behandlungsreagenzien, die teuer sind und lediglich mit einem Volumen entsprechend der Aufnahme für die Probe zugeführt werden, sicher am Zulauf aufgenommen werden. Andererseits können mit größeren Volumina erforderliche Wasch- oder Spülreagenzien, die ggf. weniger teuer sind, in entsprechend größeren Mengen in einem einzigen Beschickungsvorgang zugeführt werden. Anwendungsabhängig kann somit vorgesehen sein, daß das Volumen des Flüssigkeitsreservoirs 21 über den oben angegebenen Beispielwert noch weiter vergrößert wird. Hierzu ist ggf. auch eine größere Dicke der Grundplatte 20 vorgesehen.

Die Trägerplatte 30 ist ebenfalls eine Glasplatte, die in Form und Größe vorzugsweise standardisierten Objektträgern oder Deckgläsern entspricht, wie sie aus der Mikroskopie bekannt sind. Die Trägerplatte 30 ist auf der zur Grundplatte 20 hinweisenden Seite gegebenenfalls zumindest teilweise mit einer Modifizierungsschicht (nicht gezeigt) versehen. Die Modifizierungsschicht, wie sie an sich aus der Mikroskopie bekannt ist, bildet kovalente Bindungen zwischen dem polaren Silikat der Trägerplatte 30 und der zu halternden Gewebeprobe 90 aus, so daß diese auf der Trägerplatte 30 fixiert wird. Die Gewebeprobe 90 ist beispielsweise ein Gewebeschnitt mit einer Dicke im Bereich von 1 µm bis 50 µm.

Durch die Distanzhalter 40 wird zwischen den zueinander weisenden ebenen Oberflächen der Grund- und Trägerplatten 20, 30 eine spalt- oder schichtförmige Aufnahme für die Probe 90 gebildet. Die Distanzhalter 40 umfassen gemäß der in Figur 1 argestellten ersten Ausführungsform der Erfindung zwei Distanzhalterstreifen 41, 42, die auf den zueinander weisenden Oberflächen der Grund- und Trägerplatten 20, 30 an deren seitlichen Rändern vom Zulauf 11 bis zum Ablauf 12 verlaufend angeordnet sind. Die Distanzhalterstreifen 41, 42 bestehen aus einem Kunststoffmaterial, das unter der Wirkung der Andruckspannung der Klammereinrichtung 60 komprimierbar und im komprimierten Zustand flüssigkeitsdicht ist. Die Distanzhalterstreifen 41, 42 bestehen beispielsweise jeweils aus einer rund 2 bis 3 mm breiten Bahn aus Silikonkautschuk mit einer vorbestimmten Dicke, die vor Zusammensetzen der Kammer auf die Grund- oder Trägerplatte aufgebracht ist. Da durch die Distanzhalterstreifen 41, 42 die Querdimension der Probenaufnahme zwischen den Grund- und Trägerplatten 20, 30 bestimmt wird, wird die Bahndicke anwendungsabhängig gewählt. Für ISH-Anwendungen beträgt sie beispielsweise rund 100 bis 130 µm. Die Bahn aus Silikonkautschuk dient vorteilhafterweise simultan als Distanzhalter zwischen der Grundplatte 20 und der aufgelegten Trägerplatte 30 (Objektträger mit Probe 90) und aufgrund ihrer Beschaffenheit auch der seitlichen Abdichtung der Kammer. Durch die Distanzbildung zwischen den Platten wird verhindert, daß Probenmaterial (z.B. dicke Gewebeschnitte) unerwünscht komprimiert werden. Außerdem wird damit der Zufluß von Behandlungsflüssigkeiten (Reagenzien) zum behandelnden Material erleichtert.

Gemäß einer abgewandelten Ausführungsform einer erfindungsgemäßen Durchflußkammer umfassen die Distanzhalter 40 zwei seitlich an die Grundplatte 20 anpolymerisierte Epoxystege 43, 44, die in den Figuren 3 und 4 illustriert sind. In diesen Figuren ist lediglich die Grundplatte 20 in Draufsicht bzw. in Seitenansicht dargestellt. Im Unterschied zur Ausführungsform gemäß Figur 1 ist am oberen Ende der Grundplatte 20 der Rampenbereich 22 ohne seitliche Stege gebildet. Die keilförmige Rampe verläuft über die gesamte Plattenbreite. Die seitliche Abgrenzung des Flüssigkeitsreservoirs 21 wird hier durch die durchgehenden Epoxystege 43, 44 bereitgestellt. Die Epoxystege 43, 44 ragen auf der zur Trägerplatte 30 hinweisenden Seite der Glasplatte 20, d.h. auf der Seite mit dem Rampenbereich 22, über die Oberfläche der Glasplatte 20 hinaus, so daß wiederum eine Stufe als Distanzhalter gegenüber der Trägerplatte 30 gebildet wird. Hierzu werde die anpolymerisierten Epoxystege 43, 44 in der gewünschten Höhe über der Glasoberkante (z.B. 100 bis 130 µm) abgefräst.

Die anpolymerisierten Epoxystege 43, 44 gemäß Figur 3 können ersatzweise auch durch form- und größengleiche Kunststoffstreifen (z.B. aus PTFE) ersetzt werden, die in der Rahmenanordnung 50 (siehe Figur 1) im eingelegten Zustand seitlich an die Glasplatte 20 gepreßt werden und auf der zur Trägerplatte 30 hinweisenden Seite über die Oberfläche der Glasplatte 20 hinausragen. Die seitlichen PTFE-Streifen bilden wiederum gegenüber der Oberfläche der Glasplatte 20 einen Vorsprung entsprechend der gewünschten Distanz zwischen den Glas- und Trägerplatten 20, 30 (z.B. im Bereich von 100 bis 130 µm).

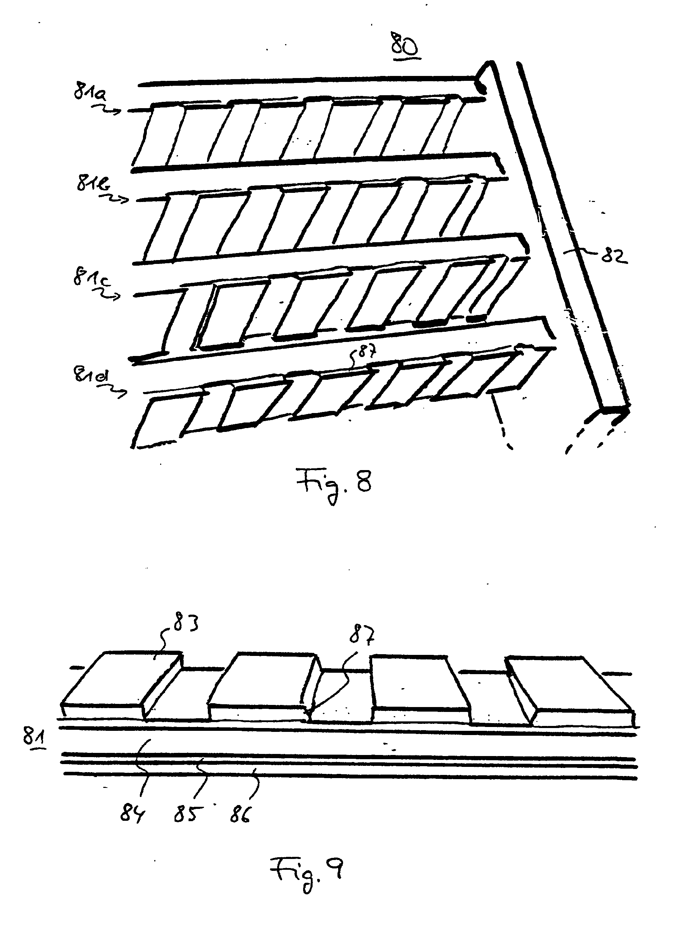

Gemäß einer weiteren, in Figur 7 illustrierten Alternative werden die Distanzhalter 40 durch Folienstreifen 45, 46 auf der Grund- oder Trägerplatte 20, 30 gebildet. Die Folienstreifen 45, 46 bestehen beispielsweise aus PE-Folie oder einem anderen im Laborbereich gängigen Folienmaterial, das gegenüber den eingesetzten Behandlungsflüssigkeiten beständig ist. Es ist vorgesehen, einen breiten Streifen 47 mit einer oder aufeinanderfolgend mehreren "O"-förmigen Ausnehmungen 48 vorzubereiten, so daß er auf die Grund- oder Trägerplatte 20, 30 aufgelegt gerade an deren Rand auf der zu jeweils anderen Platte weisenden Oberfläche verläuft. Die Ausnehmung 48 besitzt eine Längsausdehnung (z. B. 80 mm), die größer als die Länge der Grund- und Trägerplatten ist, und eine Querausdehnung (z. B. 16 mm) entsprechend dem gewünschten Abstand der Distanzhalter. Dadurch werden gerade die seitlichen Folienstreifen 45, 46 (mit einer Breite von z. B. 5 mm) gebildet. Vor dem Zusammensetzen der Durchflußkammer wird die O-förmige Folie mit einer Ausnehmung 48 einfach auf die jeweilige Platte aufgelegt und im Zusammenhalt mit der Rahmenanordnung 50 unter Wirkung der Klammereinrichtung 60 zwischen den Platten zusammengedrückt. Die an den schmalen Enden der Packung herausragenden Teile des breiten Streifens 47 werden abgeschnitten, so daß nur die schmalen Folienstreifen 45, 46 zwischen den Platten zurückbleiben. Diese Gestaltung besitzt den Vorteil, daß mit dem Distanzhalter ein billiges Einwegprodukt geschaffen wird, das bei Bedarf sogar ohne weiteres im Labor durch Stanzen des Streifens 47 nachproduziert werden kann.

Eine weitere, nicht dargestellte alternative Form der Distanzhalter basiert auf der Verwendung eines lösungsmittelresistenten Lackes, der streifenförmig auf eine oder beide der zueinander weisenden Plattenoberflächen aufgebracht wird, oder einer Kunststoffbeschichtung, wie sie zur Bildung von Beschriftungsfeldern auf Substraten eingesetzt wird, z. B. aus dem Material "Superfrost" (reg. Marke).

Schließlich könnten die Distanzhalter auch durch streifenförmige, mit einer Dichtung versehene Vorsprünge der Plattenränder gebildet werden.

Die Rahmenanordnung 50 besitzt eine Doppelfunktion. Einerseits dient sie der Ausrichtung der Grund- und Trägerplatten 20, 30 relativ zueinander und andererseits dient sie der Handhabung der Durchflußkammer 10, z.B. in Bezug auf das Einhängen in einer Temperierungseinrichtung. Gemäß Figur 1 besteht die Rahmenanordnung 50 aus zwei profilierten Seitenwangen 51 und zwei Verbindungsbügeln, die gerade durch die Bügel 71 der Einhängvorrichtung gebildet werden. Zwischen den Bügeln 71 ist ein Abstand oder eine Freifläche 52 gebildet, die ein direktes Anliegen der Kontaktplattformen des Thermoblocks (siehe unten) an der äußeren Oberfläche der Trägerplatte 30 erlaubt. Die Rahmenanordnung ist aus einem Kunststoffmaterial (z.B. PON) oder Metall (z.B. Aluminium oder Edelstahl) hergestellt. Die Dimensionen der Rahmenanordnung 50 sind an die Gestalt und Größe der Grund- und Trägerplatten 20, 30 angepaßt. So entspricht der Abstand der Seitenwangen 51 im wesentlichen der Grundfläche der Trägerplatte 30. Bei den oben erläuterten Ausführungsformen mit Distanzhaltern in Form seitlich anpolymerisierter oder angepreßter Stege ist dieser Abstand entsprechend verbreitert. Die Längsausdehnung der Seitenwangen 51 entsprechend der vertikalen Durchflußrichtung kann sich teilweise oder vollständig über die Länge der Grund- und Trägerplatten 20, 30 erstrecken, wie dies in den Figuren 1 bzw. 2 illustriert ist. Die Freifläche 52 bildet auch ein Fenster, das der visuellen und/oder meßtechnischen Beobachtung der Probe 90 in der Durchflußkammer 10 dient.

Die Seitenwangen 51 erstrecken sich über die gesamte Länge der Rahmenanordnung 50. Sie besitzen eine Höhe derart, daß die Distanzhalter 40 und die von der Basisfläche 52 entfernt liegende Platte (hier: die Grundplatte 20) zumindest teilweise überdeckt werden.

An der Rahmenanordnung 50 ist mindestens eine Einhängvorrichtung 70 vorgesehen. Die Einhängvorrichtung 70 wird allgemein durch einen Haken, einen Vorsprung oder eine Schlaufe oder dergleichen gebildet, womit die Durchflußkammer in einer Reaktionskammer, einer Temperierungseinrichtung oder auch anderen Behältern lösbar einhängbar ist. Vorzugsweise wird die Einhängvorrichtung 70 jedoch wie dargestellt durch mindestens einen der Bügel 71 der Rahmenanordnung 50 gebildet, der sich zwischen zwei seitlichen Vorsprüngen 53 am Ende der Seitenwangen 51 erstreckt.

Vorzugsweise ist die Rahmenanordnung 50 an ihren Enden mit zwei Einhängvorrichtungen 70 ausgestattet. Die Rahmenanordnung 50 besitzt entlang den Seitenwangen über deren gesamte Länge verlaufende Stege 54, die sich an den Enden zu den Vorsprüngen 53 erweitern. In jedem der Vorsprünge 53 befindet sich eine Bohrung 55 zur Aufnahme eines Bügels 71 für die jeweilige Einhängvorrichtung 70.

Die Klammereinrichtung 60 umfaßt mindestens zwei seitlich angebrachte U-förmige Klammern, die die Packung aus Grund- und Trägerplatten 20, 30 mit den Distanzhaltern 40 und der Rahmenanordnung 50 einspannen. Gemäß der dargestellten Ausführungsform ist auf jeder Seite der Durchflußkammer 10 eine durchgehende Klammer 61, 62 vorgesehen. Die Klammern bestehen aus einem geeignet federnden Kunststoffmaterial oder Metall.

In den Figuren 8 bis 10 ist das Zusammenwirken der erfindungsgemäßen Durchflußkammer mit einer Temperierungseinrichtung in Form eines Thermoblocks 80 illustriert.

Der Thermoblock 80 umfaßt mindestens eine Trägerreihe 81, 81a, 81b, 81c, 81d, die jeweils an einer Seitenwand 82 des Thermoblocks 80 angebracht ist. Jede Trägerreihe 81 (siehe Figur 8) weist eine Vielzahl von Kontaktplattformen 83 auf, die auf einer Kontaktplatte 84 angebracht sind. Die Kontaktplatte 84 ist über eine Abdichtung 85 mit einer Deckplatte 86 verbunden. Die Kontaktplatte 84 besitzt eine innere Ausfräsung, so daß hin zur Deckplatte 86 ein Hohlraum gebildet wird. Der Hohlraum ist dazu ausgelegt, von der ebenfalls hohlen Seitenwand 82 her von einem Temperierungsmedium (z.B. Wasser) durchströmt zu werden. Der Thermoblock 80 ist hierzu mit einer (nicht dargestellten) Thermostatierungseinrichtung zur Temperierung des Temperierungsmediums verbunden. Mit der Abdichtung 85 wird das Temperierungsmedium vom seitlichen Austritt gehindert.

Die Kontaktplatte 84 besitzt auch äußere Ausfräsungen, durch die einstückig mit der Kontaktplatte 84 die Kontaktplattformen 83 gebildet werden. Jede Kontaktplattform 83 besitzt an mindestens einer Seite einen profilierten Vorsprung 87 zur Aufnahme der Einhängvorrichtung 70 der oben beschriebenen Durchflußkammer. Die Kontaktplatte 84 und die Kontaktplattformen 83 bestehen aus einem Material mit hoher Wärmeleitfähigkeit, vorzugsweise aus Metall, wie z.B. aus Aluminium oder Kupfer. Die Deckplatte 86 besteht beispielsweise aus Stahl.

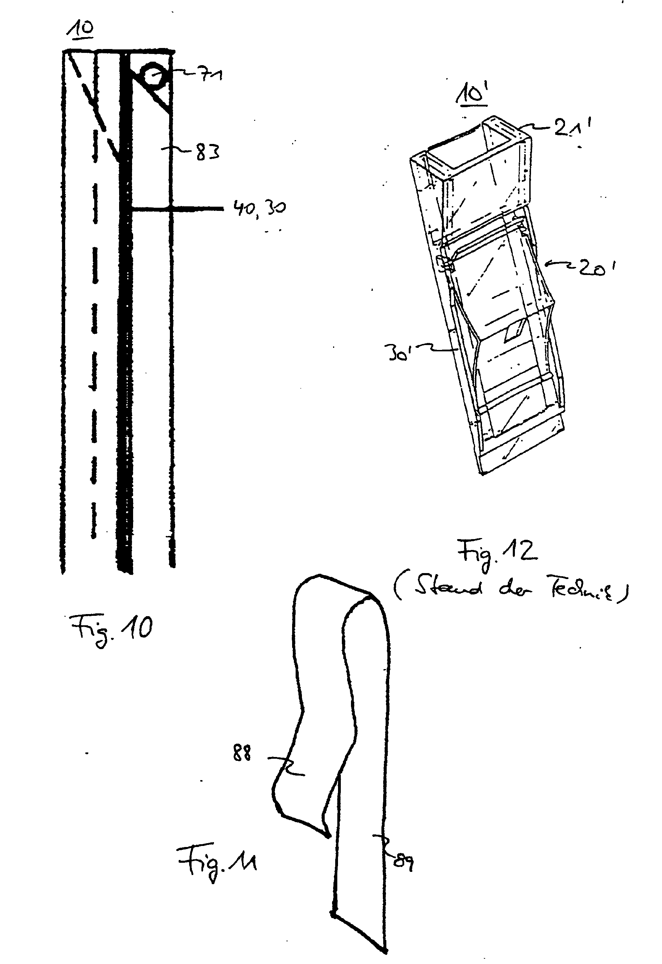

Das Einhängen einer Durchflußkammer 10 an einem Thermoblock 83 ist in der Schnittansicht gemäß Figur 10 illustriert. Die Durchflußkammer 10 (teilweise dargestellt) besitzt einen Aufbau, der im wesentlichen der in den Figur 1 und 2 illustrierten Ausführungsform entspricht. Die Kontaktplattform 83 besitzt an ihrem in Betriebsfunktion oberen Ende den profilierten Vorsprung 87 in Form einer keilförmigen Schräge, die den Bügel 71 der Einhängvorrichtung 70 hintergreift. Der Vorteil dieser Anordnung besteht darin, daß die Durchflußkammer 10 durch ihr Gewicht und das Zusammenwirken des Bügels 71 mit der keilförmigen Schräge des Vorsprungs 87 an die Kontaktplattform 83 gezogen wird, so daß sich ein gut wärmeleitender Kontakt ergibt.

Der Thermoblock 80 wird zum Betrieb mit Durchflußkammern in eine (nicht dargestellte) Wanne eingesetzt, die eine geschlossene Flüssigkeitsaufnahme darstellt. In der Wanne werden die durch die Durchflußkammern durchlaufenden Behandlungsflüssigkeiten aufgefangen. Gleichzeitig liefern die in der Wanne gesammelten Lösungen eine zumindest teilweise mit verdampften Lösungsmitteln angereicherte Atmosphäre, die ein unerwünschtes Austrocknen der Durchflußkammern verhindert. Die Wanne ist mit einer Abführeinrichtung zum Abziehen von Teilen der aufgefangenen Flüssigkeiten und einer Abdeckeinrichtung ausgestattet. Die Abdeckeinrichtung dient dem Abschluß der Wanne auf der Oberseite und ist ggf. zur Beschickung der Durchflußkammern mit einer Vielzahl von verschließbaren Öffnungen entsprechend deren Anordnung versehen.

Figur 11 illustriert einen Greifer, der zur manuellen Handhabung der Durchflußkammern im Thermoblock ausgebildet ist. Der Greifer besitzt die Form eines gebogenen Streifens, durch den einerseits eine Zunge 88 und andererseits ein Ausleger 89 gebildet werden. Die Breite des Streifens ist geringfügig geringer als der Abstand der Vorsprünge 53 der Rahmenanordnung 50 und beträgt z. B. 17 mm. Die Zunge 88 ist an ihrem gewellten Ende zum Eingriff am Bügel 71 der Rahmenanordnung 50 geformt. Der Ausleger 89 ragt in Längsrichtung des Greifers noch über die Länge der Zunge 88 hinaus, um so eine Stütze für die aufgenommene Durchflußkammer zu bilden. Die Länge des Auslegers 89 beträgt z. B. 80 mm. Der Greifer besteht aus einem federnden Stahlblech (Dicke rd. 5 mm).

Zum praktischen Einsatz der erfindungsgemäßen Durchflußkammern wird zunächst die zu untersuchende Probe auf der Trägerplatte 30 (z.B. Objektträger) angeordnet. Anschließend wird die Trägerplatte 30 mit der Grundplatte 20 zusammengefügt und in die Rahmenanordnung 50 eingelegt. Die Gesamtpackung wird dann mit der Klammereinrichtung 60 fixiert. Anschließend wird die Durchflußkammer mit dem in Figur 11 illustrierten Greifer an einer Kontaktplattform 83 des Thermoblocks 80 eingehängt. Der Thermoblock 80 wird für high-throughput-Verfahren mit einer Vielzahl von Durchflußkammern, jeweils mit einer oder mehreren Proben, beschickt. Anschließend wird beispielsweise die ISH unter genau kontrollierten Temperaturbedingungen im Temperaturbereich zwischen 4°C bis 100°C entsprechend vorbestimmten Zeitprogrammen durchgeführt. Die jeweiligen Behandlungsflüssigkeiten werden mit einem Pipettierroboter von oben in die Zuläufe 11 der Durchflußkammern 10 gegeben. Die Behandlungsflüssigkeiten laufen durch die Durchflußkammer durch, wobei an den Proben jeweils die gewünschten Reaktionen ausgelöst werden. Nach dem Verfahrensablauf entsprechend einem bestimmten Substanz-, Zeit- und Temperierungsprotokoll, das an sich bekannt ist und daher hier im einzelnen nicht erläutert wird, werden die Durchflußkammern aus dem Thermoblock entnommen und einer weiteren Untersuchung der Proben, z.B. optischen Messungen oder einer mikroskopischen Untersuchung, zugeführt.

Die oben beschriebene Durchflußkammer ist nicht auf die ISH-Anwendungen beschränkt, sondern vielmehr bei Flüssigkeitsbehandlungen beliebiger synthetischer oder biologischer Proben in Schichtform anwendbar. Je nach Gestaltung der abdichtenden Distanzhalter kann auch ohne weiteres vom Durchflußprinzip ausgegangen werden. Durch Abdichtung der Aufnahme zwischen den Grund- und Trägerplatten auf der zum Zulauf entgegengesetzten Seite wird eine geschlossene Reaktionsklammer gebildet. Die erfindungsgemäße Probenkammer kann als Durchfluß- oder Reaktionskammer auch in Bezug auf ihre Größe anwendungsabhängig modifiziert werden. Eine weitere Modifizierung betrifft die Größe und Gestalt der Grund- und Trägerplatten. Diese wurden oben unter Bezug auf das Objektträgerformat beschrieben. Ein Aufbau unter Anpassung an das Format von Substraten für DNA-Mikroarrays ist in entsprechender Weise möglich. Ferner wurden die Platten mit verschiedenen Dicken beschrieben, wobei die Rampe an der dickeren (Grund-)Platte vorgesehen war. Alternativ können auch beide Grund- und Trägerplatten mit Rampen ausgestattet sein, die im zusammengesetzten Zustand aufeinander zuweisen.

## Patentansprüche

1. Probenkammer (10) für die Flüssigkeitsbehandlung mindestens einer Probe (90), mit einer Grundplatte (20) und einer Trägerplatte (30), zwischen denen eine spaltförmige Aufnahme für die Probe gebildet ist, wobei die Grundplatte (20) an einem Zulauf (11) auf der zur Trägerplatte (30) weisenden Seite eine Verjüngung zur Bildung eines keilförmigen Flüssigkeitsreservoirs (21) aufweist, **dadurch gekennzeichnet, dass**
die Grund- und Trägerplatten (20, 30) mit einer Klammereinrichtung (60) in einer Rahmenanordnung (50) zusammengehalten werden und zur Bildung der Aufnahme durch Distanzhalter (40) voneinander getrennt sind, wobei die Rahmenanordnung (50) einen O-förmigen Aufbau mit zwei Seitenwangen (51) umfasst, die an ihren Enden über Bügel (71) verbunden sind.

2. Probenkammer gemäß Anspruch 1, bei der sich die Seitenwangen (51) über die gesamte Länge der Rahmenanordnung (50) erstrecken und die Distanzhalter (40) sowie die Grundplatte (20) zumindest teilweise überdecken.

3. Probenkammer gemäß Anspruch 1 oder 2, bei der die Aufnahme am Zulauf (11) und an einem Ablauf (12) offen ist und die Distanzhalter (40) streifenförmig zwischen dem Zulauf und dem Ablauf an den Rändern der Grund- und Trägerplatten (20, 30) ausgebildet sind.

4. Probenkammer gemäß Anspruch 3, bei der die Distanzhalter durch streifenförmige, mit einer Dichtung versehene Vorsprünge an den Plattenrändern gebildet werden.

5. Probenkammer gemäß Anspruch 3, bei der die Distanzhalter durch Streifen (41, 42) aus komprimierbarem Kunststoffmaterial auf den Plattenrändern gebildet werden.

6. Probenkammer gemäß Anspruch 3, bei der die Distanzhalter durch Kunststoffstege (43, 44) an den seitlichen Rändern der Grundplatte (20) gebildet werden, die über die Oberfläche der Grundplatte (20) auf der zur Trägerplatte 30 weisenden Seite hinausragen.

7. Probenkammer gemäß einem der Ansprüche 5 oder 6, bei der die Distanzhalter aus Silikonkautschuk, Epoxyharz, Polyethylen oder PTFE bestehen.

8. Probenkammer gemäß einem der vorhergehenden Ansprüche, bei der an der Rahmenanordnung (50) eine Einhängvorrichtung (70) zum Einhängen der Probenkammer (10) in eine Temperierungseinrichtung vorgesehen ist.

9. Probenkammer gemäß Anspruch 8, mit einer Temperierungseinrichtung, die eine Vielzahl von reihen- und spaltenweise angeordneten temperierbaren Kontaktplattformen aufweist, die jeweils an ihrem oberen Ende einen profilierten Vorsprung (87) zur lösbaren Einhängung der Probenkammer aufweisen.

10. Verfahren zum Durchführen von Flüssigkeitsbehandlungen an synthetischen oder biologischen Proben in zumindest einer Probenkammer (10) gemäß einem der vorhergehenden Ansprüche.

11. Verfahren gemäß Anspruch 10, wobei das Verfahren die folgenden Schritte umfasst:
- Anordnen der Proben auf der Trägerplatte (30),
- Zusammenfügen der Trägerplatte (30) mit der Grundplatte (20),
- Erstellen einer Gesamtpackung durch Einlegen der zusammengefügten Träger- und Grundplatte in die Rahmenanordnung (50), Fixieren der Gesamtpackung mit der Klammereinrichtung (60), und
- Durchlaufenlassen einer Behandlungsflüssigkeit durch die Probenkammer (10), wobei an den Proben eine gewünschte Reaktion ausgelöst wird.

12. Verfahren gemäß einem der Ansprüche 10 bis 11, bei welchem die Temperatur der zumindest einen Probenkammer (10) in einem Bereich zwischen 4°C und 100°C kontrolliert wird.

## Claims

1. Sample chamber (10) for the liquid treatment of at least one sample (90), with a base plate (20) and a support plate (30), between which a gap-shaped receptacle for the sample is formed, wherein at an inlet (11) on the side pointing to the support plate (30) the base plate (20) has a tapering section to form a wedge-shaped liquid reservoir (21), **characterised in that** the base and support plates (20, 30) are held together in a frame arrangement (50) with a clamping means (60) and are separated from one another by spacers (40) to form the receptacle, wherein the frame arrangement (50) comprises an O-shaped structure with two side cheeks (51), which are connected at their ends via clips (71).

2. Sample chamber according to Claim 1, wherein the side cheeks (51) extend over the entire length of the frame arrangement (50) and at least partially overlap the spacers (40) and also the base plate (20).

3. Sample chamber according to Claim 1 or 2, wherein the receptacle is open at the inlet (11) and at an outlet (12) and the spacers (40) are configured in the form of a strip between the inlet and the outlet on the edges of the base and support plates (20, 30).

4. Sample chamber according to Claim 3, wherein the spacers are formed by strip-shaped projections provided with a seal on the plate edges.

5. Sample chamber according to Claim 3, wherein the spacers are formed by strips (41, 42) made of compressible plastic material on the plate edges.

6. Sample chamber according to Claim 3, wherein the spacers are formed by plastic fins (43, 44) on the side edges of the base plate (20), which project beyond the surface of the base plate (20) on the side pointing to the support plate (30).

7. Sample chamber according to one of Claims 5 or 6, wherein the spacers are made of silicone rubber, epoxy resin, polyethylene or PTFE.

8. Sample chamber according to one of the preceding claims, wherein a suspension device (70) is provided on the frame arrangement (50) to suspend the sample chamber (10) into a temperature regulating device.

9. Sample chamber according to Claim 8 with a temperature regulating device, which has a plurality of temperature-controlled contact platforms arranged in rows or columns, which respectively at their upper end have a profiled projection (87) for the detachable suspension of the sample chamber.

10. Method for conducting liquid treatments on synthetic or biological samples in at least one sample chamber (10) according to one of the preceding claims.

11. Method according to Claim 10, wherein the method comprises the following steps:
• arrangement of the samples on the support plate (30),
• fitting together the support plate (30) and the base plate (20),
• preparing a complete pack by inserting the joined support and base plate into the frame arrangement (50), fastening the complete pack with the clamping means (60),
• passing a treatment liquid through the sample chamber (10), wherein a desired reaction is activated on the samples.

12. Method according to one of Claims 10 to 11, wherein the temperature of the at least one sample chamber (10) is controlled in a range of between 4°C and 100°C.

## Revendications

1. Chambre d'échantillon (10) pour le traitement liquide d'au moins un échantillon (90), comprenant une plaque de base (20) et une plaque de support (30), entre lesquelles est formée une réception en forme de fente pour l'échantillon, la plaque de base (20) comprenant au niveau d'un orifice d'admission (11), sur la face tournée vers la plaque de support (30), un rétrécissement destiné à former un réservoir de liquide cunéiforme (21), **caractérisée en ce que** les plaques de base et de support (20, 30) sont maintenues ensemble dans un cadre (50) par un dispositif de serrage (60) et pour former la réception, sont séparées l'une de l'autre par des écarteurs (40), le cadre (50) comportant une structure en forme de O dotée de deux joues latérales (51), qui sont reliées à leurs extrémités par des étriers (71).

2. Chambre d'échantillon selon la revendication 1, dans laquelle les joues latérales (51) s'étendent sur la longueur totale du cadre (50) et recouvrent au moins en partie les écarteurs (40) ainsi que la plaque de base (20).

3. Chambre d'échantillon selon la revendication 1 ou 2, dans laquelle la réception est ouverte au niveau de l'orifice d'admission (11) et au niveau de l'orifice d'évacuation (12) et les écarteurs (40) sont formés comme des bandes entre l'orifice d'admission et l'orifice d'évacuation sur les bords des plaques de base et de support (20, 30).

4. Chambre d'échantillon selon la revendication 3, dans laquelle les écarteurs sont formés sur les bords des plaques par des saillies du type bande, pourvues d'un joint.

5. Chambre d'échantillon selon la revendication 3, dans laquelle les écarteurs (41, 42) sont formés sur les bords des plaques d'une matière plastique pouvant être comprimée.

6. Chambre d'échantillon selon la revendication 3, dans laquelle les écarteurs sont formés par des nervures en plastique (43, 44) sur les bords latéraux de la plaque de base (20), qui dépassent de la surface de la plaque de base (20) sur la face tournée vers la plaque de support (30).

7. Chambre d'échantillon selon la revendication 5 ou 6, dans laquelle les écarteurs sont constitués de caoutchouc siliconé, de résine époxy, de polyéthylène ou de PTFE.

8. Chambre d'échantillon selon l'une quelconque des revendications précédentes, dans laquelle un dispositif de suspension (70), destiné à suspendre la chambre d'échantillon (10) dans un système d'équilibrage de température, est prévu sur le cadre (50).

9. Chambre d'échantillon selon la revendication 8, comprenant un système d'équilibrage de température qui comprend une pluralité de plateformes de contact pouvant être tempérées et disposées en rangées et en colonnes, qui comprennent respectivement sur leur extrémité supérieure une saillie profilée (87) destinée à suspendre de manière amovible la chambre d'échantillon.

10. Procédé de réalisation de traitements liquides sur des échantillons synthétiques ou biologiques dans au moins une chambre d'échantillon (10) selon l'une quelconque des revendications précédentes.

11. Procédé selon la revendication 10, le procédé comportant les étapes suivantes :
- disposition des échantillons sur la plaque de support (30),
- assemblage de la plaque de support (30) à la plaque de base (20),
- établissement d'une garniture totale en insérant les plaques de support et de base assemblées dans le cadre (50), fixation de la garniture totale au système de serrage (60), et
- passage d'un liquide de traitement à travers la chambre d'échantillon (10), une réaction souhaitée sur les échantillons étant déclenchée.

12. Procédé selon l'une quelconque des revendications 10 à 11, dans lequel la température de la au moins une chambre d'échantillon (10) est contrôlée dans une plage comprise entre 4°C et 100°C.
